# EUROPÄISCHE PATENTSCHRIFT

(11) **EP 0 718 019 B1**
(45) Veröffentlichungstag und Bekanntmachung des Hinweises auf die Patenterteilung: **14.02.2001**
(21) Anmeldenummer: 95119909.0
(22) Anmeldetag: 16.12.1995
(51) Int. Cl.: B01D 21/02, B01D 21/00, B01D 21/24

(54) **Behälter zur mechanischen Vorklärung von Abwasser**
Tank for the mechanical preclarification of waste water
Récipient pour la préclarification mécanique d'eaux résiduaires

(30) Priorität: 24.12.1994 DE 9420711 U
(43) Veröffentlichungstag der Anmeldung: 26.06.1996
(73) Patentinhaber: DYCKERHOFF & WIDMANN AG, 81902 München (DE)
(72) Erfinder:
(74) Vertreter: Patentanwälte Möll und Bitterich

(56) Entgegenhaltungen:
- DE-A- 3 305 344
- DE-B- 1 142 798

## Beschreibung

Die Erfindung betrifft einen Behälter zur mechanischen Vorklärung von Abwasser mit einer Zu- und einer Ablauföffnung.

Bei der mechanischen Vorklärung von Abwasser ist es bekannt, die Feststoffphase, bestehend aus Schwimmstoffen und sedimentationsfähigen Stoffen, von der Flüssigphase zu trennen. Dies geschieht im allgemeinen durch Sedimentation in einem eigens dafür bestimmten Abscheidebehälter. Dabei ist das Ziel, die Fließenergie und damit die Fließgeschwindigkeit im Abscheidebehälter so weit zu verringern, daß die Schleppkraft des Wassers geringer ist als die Schwerkraft der Schmutzpartikel. Erst dann ist ein Absinken und Ansammeln der Schmutzpartikel am Boden des Abscheidebehälters möglich.

Herkömmliche Feststoffabscheider bestehen meist aus einem Behälter, der im oberen Bereich an einander gegenüberliegenden Seiten einen Zu- und einen Ablauf besitzt. Über den Zulauf, in der Regel ein Rohrstutzen, wird der Behälter punktuell mit Abwasser beschickt. In dem Raum zwischen Zu- und Ablauf findet eine Beruhigung des Fließvorganges, d.h. eine Verlangsamung der Fließgeschwindigkeit statt, so daß Feststoffpartikel sedimentieren können. Hier erfolgt also die Trennung der Feststoffphase von der Flüssigphase. Die Flüssigphase wird anschließend an der Oberfläche über den Ablauf punktuell aus dem Behälter abgeleitet.

Dabei hat sich herausgestellt, daß die zu reinigende Flüssigkeit den Behälter nur in Teilquerschnitten durchströmt, und zwar bevorzugt im oberflächennahen Bereich geradlinig vom Zulauf zum Ablauf. Dadurch entsteht dort eine Zone mit verhältnismäßig großer Fließgeschwindigkeit und entsprechend kleiner Verweilzeit. In den Bereichen seitlich und unterhalb dieser Zone findet nur ein geringer Flüssigkeitsaustausch mit geringen Fließgeschwindigkeiten statt. Demzufolge durchströmt der größte Teil der ankommenden Flüssigkeit den Feststoffabscheider mit relativ hoher Geschwindigkeit in der oben genannten Zone. Da aber mit zunehmender Fließgeschwindigkeit die Sedimentation von Feststoffpartikeln beeinträchtigt wird, sinkt die Reinigungsleistung des Feststoffabscheiders insgesamt.

Um eine möglichst gleichmäßige Durchströmung zu erreichen und "tote Zonen" mit stehendem Abwasser oder gar Zonen mit rückwärts gerichteter Strömung zu vermeiden, ist es bei einem als Rundbecken ausgebildeten Behälter bekannt, vor der unterhalb des Flüssigkeitsspiegels angeordneten Zulauföffnung eine Leitvorrichtung anzuordnen (DE 33 05 344 C2). Diese Leitvorrichtung besteht aus einem entgegen der Krümmung der Behälterwand gekrümmten, einen Hohlzylinder bildenden Leitblech, gegen das die zulaufende Flüssigkeit strömt, die zugleich durch horizontale Prallbleche in einen oberen und einen unteren Strom geteilt wird. Außerdem ist um dieses gekrümmte Blech herum eine Art Gitter aus einer Mehrzahl von dessen Krümmung folgenden Stäben angerodnet. Auf diese Weise wird bei der Durchströmung des Beckens das gesamte Abwasservolumen in Bewegung gehalten; dies ist der Abscheidung von Sinkstoffen aus dem Abwasser nicht zuträglich.

Vor diesem intergrund liegt der Erfindung die Aufgabe zugrunde, Voraussetzungen zur Verbesserung des Sedimentationsvorgangs bekannter Feststoffabscheider zu schaffen.

Gemäß der Erfindung wird diese Aufgabe durch einen Absetzbehälter mit den Merkmalen des Anspruchs 1 gelöst.

Vorteilhafte Weiterbildungen ergeben sich aus den Unteransprüchen.

Der Vorteil der Erfindung besteht zunächst darin, daß durch die im Einlaufbereich angeordneten Mittel, insbesondere ein Leitblech, die Strömung geteilt und die Fließenergie des ankommenden Flüssigkeitsstroms reduziert wird. Durch die gleichmäßige Verteilung des feststoffbeladenen Wassers über den nahezu gesamten Querschnitt und die Länge des Behälters wird eine beruhigte Strömung erzeugt, die das Abscheiden der Feststoffpartikel fördert.

Eine weitere Reduzierung der Fließgeschwindigkeit und damit Vernichtung von Fließenergie ergibt sich durch die Anordnung entsprechender Mittel, insbesondere einer Stauwand, im Ablaufbereich. Insbesondere dann, wenn sich die Höhe der Überlaufkante auf dem Niveau der Längsachse der Zulauföffnung befindet, führt dies ab einer bestimmten Beschickung zu einem planmäßigen Rückstau der zulaufenden Flüssigkeit, ohne daß dadurch die Gesamtdurchlaufleistung des Absetzbehälters beeinträchtigt wird. Der Rückstau bewirkt dabei auch im Einlaufbereich einen Wechsel der Strömungsverhältnisse vom Schießen ins Strömen, also eine Verlangsamung der Fließgeschwindigkeit.

Im weiteren Verlauf wird durch die besondere Gestaltung der Leit- und Abzugseinrichtungen die zu reinigende Flüssigkeit im wesentlichen über den gesamten Behälterquerschnitt verteilt. Dies bewirkt eine Vergleichmäßigung und damit weitere Verringerung der Fließgeschwindigkeit in dem Behälter.

Die Erfindung wird nachstehend anhand eines in der Zeichnung dargestellten Ausführungsbeispiels erläutert. Es zeigen
- Fig. 1: einen Vertikalschnitt durch einen Feststoffabscheider,
- Fig. 2: einen Horizontalschnitt durch den Feststoffabscheider entlang der Linie II-II in Fig. 1,
- Fig. 3: eine Draufsicht auf den Zulaufbereich in vergrößertem Maßstab und
- Fig. 4: einen Querschnitt durch den in Fig. 3 dargestellten Bereich entlang der Linie IV-IV.

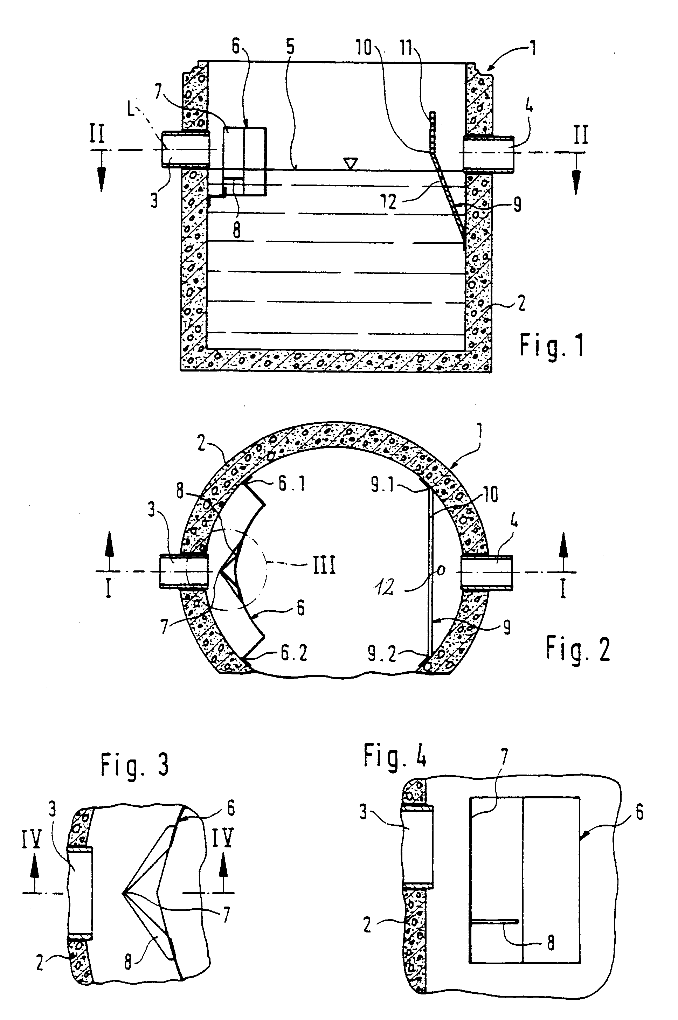

In den Fig. 1 und 2 ist ein erfindungsgemäßer Feststoffabscheider 1 im Vertikal- und Horizontalschnitt dargestellt. Der Feststoffabscheider 1 besteht aus einem kreiszylindrischen Behälter 2 aus Beton oder Stahlbeton und ist bei hinreichend kleinen Dimensionen als Fertigbauteil ausgebildet. Andere Grundrißformen, wie z.B. rechteckförmig, sind in gleicher Weise geeignet. An gegenüberliegenden Seiten befinden sich im oberen Bereich Zulauf 3 und Ablauf 4. Fig. 1 zeigt den Ruhezustand des Feststoffabscheiders 1, in dem der Flüssigkeitsspiegel 5 im Behälter 2 auf der Höhe der Sohle des Ablaufs 4 liegt.

In dem Behälter 2 ist im lichten Abstand von und etwa auf der Höhe der Zulauföffnung 3 ein Leitblech 6 stehend angeordnet. Das Leitblech 6 ist etwa kreisbogenförmig mit der Krümmung der Behälterwand entsprechender Krümmung ausgebildet und parallel zu dieser angeordnet. Die seitlichen Enden 6.1, 6.2 des Leitblechs 6 sind dicht mit der Behälterwand verbunden, so daß zwischen Zulauf 3 und Leitblech 6 ein abgeschlossener Bereich entsteht, der lediglich zum Behälterboden und in entgegengesetzter Richtung nach oben offen ist.

Das Leitblech 6 weist gegenüber der Zulauföffnung 3 über seine gesamte Höhe eine vertikale Kante 7 auf. In diese ist unterhalb des Ruheflüssigkeitsspiegels 5 ein horizontales Blech 8 in einen dafür vorgesehenen Schlitz eingeschoben. Alternativ sind auch andere Befestigungsarten, wie Schweißen, Nieten etc. denkbar.

Vor der Ablauföffnung 4 ist eine Stauwand 9 mit überlaufkante 10 angeordnet. Die Stauwand 9 erstreckt sich über einen Großteil der Behälterbreite; ihre Ränder 9.1, 9.2 schließen dicht mit der Behälterwand ab. Die Überlaufkante 10 befindet sich etwa auf der Höhe der Längsachse L der Zulauföffnung 3. An sie schließt sich nach oben hin ein Gitter 11 an. In dem Bereich unterhalb der Sohle der Ablauföffnung 4 weist die Stauwand 9 eine Öffnung 12 auf, durch die in geringem Maße ein Flüssigkeitsaustausch stattfinden kann.

In den Fig. 3 und 4 ist der Zulaufbereich mit dem Leitblech 6 im Detail dargestellt. Auf der linken Seite der Darstellung sieht man den Zulauf 3. Ihm gegenüber auf der rechten Seite der Darstellung ist das Leitblech 6 angeordnet. Die Oberkante des Leitblechs 6 liegt in etwa auf der Höhe des Scheitels des Zulaufs 3. Die Unterkante des Leitblechs 6 reicht bis in den Ruheflüssigkeitsspiegel 5 im Behälter hinein.

In der Symmetrieebene des Leitblechs 6, die mit der Längsachse der Zulauföffnung 3 zusammenfällt, befindet sich eine vertikale Kante 7. Sie kann auf das kreisbogenförmige Leitblech 6 aufgesetzt oder - wie dargestellt - dadurch erzeugt sein, daß das Leitblech 6 über seine gesamte Höhe aus der Kreisform heraus zu einer spitz zulaufenden vertikalen Kante 7 gebogen ist. Im unteren Bereich der vertikalen Kante 7 nimmt ein horizontal verlaufender Schlitz im Leitblech 6 ein etwa dreieckförmiges Blech 8 auf, das mit seiner Fläche über die Grundfläche der spitz zulaufenden vertikalen Kante 7 hinausreicht und eine dem Flüssigkeitsstrom zugewandte horizontale Kante bildet.

Wird der Feststoffabscheider 1 mit Flüssigkeit beschickt, so trifft der zulaufende Flüssigkeitsstrom zunächst auf das Leitblech 6 gegenüber dem Zulauf 3. Die hervorstehende vertikale Kante 7 des Leitblechs 6 teilt und leitet dabei den Zulaufstrom nach beiden Seiten. Da das Leitblech 6 an den seitlichen Rändern dicht mit der Behälterwand abschließt, muß die zulaufende Flüssigkeit das Leitblech 6 im weiteren Verlauf unterströmen. Das horizontale Blech 8 im unteren Bereich der vertikalen Kante 7 verhindert dabei, daß der Flüssigkeitsstrom geradlinig unter dem Leitblech 6 hindurch zum Ablauf 4 fließt. Vielmehr wird er durch das horizontale Blech 8 am Unterströmen des Leitblechs 6 in diesem Bereich gehindert, wobei die Ablenkung des Flüssigkeitsstroms zur Seite unterstützt wird. Insgesamt erhält man dadurch einen Richtungsvektor der Flüssigkeit, der gleichzeitig schräg nach außen und unten zeigt. Auf diese Weise wird der konzentriert ankommende Flüssigkeitsstrom über den gesamten Querschnitt des Behälters gleichmäßig verteilt. Zumindest in der Anfangsphase entspricht dabei die Richtung des Flüssigkeitsstroms der Richtung der absinkenden Feststoffe, was die Sedimentation zusätzlich unterstützt.

Nach Durchströmen des Behälters 2 und erfolgter Sedimentation wird das Klarwasser an der Überlaufkante 10 im Ablaufbereich abgezogen. Durch die Länge der Überlaufkante 10 wird gewährleistet, daß der Flüssigkeitsstrom über die gesamte Breite des Feststoffabscheiders 1 aufgenommen wird, ohne daß der Flüssigkeitsstrom zu früh gebündelt und damit die Fließgeschwindigkeit erhöht wird. Erst nach Passieren der überlaufkante 10 findet die Bündelung zur Ablauföffnung 4 hin statt.

Durch die besondere Anordnung der Überlaufkante 10 in Höhe der Längsachse der Zulauföffnung 3 kommt es ab einer Beschickung von etwa 1 % der Nennleistung des Zulaufs 3 zu einem Rückstau, der bis in das Zulaufrohr hineinreicht. Auf diese Weise wird die Fließgeschwindigkeit der ankommenden Flüssigkeit gebremst; es findet ein Wechsel vom Schießen zum Strömen statt. In Zeiten ohne oder mit nur geringem Zufluß kann anschließend die aufgestaute Flüssigkeit über die Öffnung 12 in der Stauwand 9 durch die Ablauföffnung 4 abfließen. Da die Sohle der Ablauföffnung 4 nicht höher als der der Zulauföffnung 3 liegt, führt dies zu einer Entleerung der Zulauföffnung 3.

Schwimmstoffe, die im Zulauf 3 mitgeführt werden, werden an dem Gitter 11, das sich an die Überlaufkante 10 anschließt, zurückgehalten.

## Patentansprüche

1. Behälter zur mechanischen Vorklärung von Abwasser mit einer Zulauf- und einer dieser gegenüberliegenden Ablauföffnung und mit einer Leitvorrichtung für die zuströmende Flüssigkeit, die innerhalb des Behälters im Bereich der Zulauföffnung so angeordnet ist, dass der konzentrierte Zulaufstrom im wesentlichen gleichmäßig über den Behälterquerschnitt verteilt wird, dadurch gekennzeichnet, dass die Zulauföffnung (3) im wesentlichen auf gleicher Höhe wie die Ablauföffnung (4) angeordnet ist, die Leitvorrichtung aus einem parallel und im Abstand zur Behälterwand angeordneten Leitblech (6) mit der Krümmung der Behälterwand (2) entsprechender Krümmung besteht, das teils oberhalb und teils unterhalb des Wasserspiegels (5) angeordnet ist und das an der dem zulaufenden Flüssigkeitsstrom zugewandten Seite zumindest eine aus seiner Oberfläche hervorstehende Kante (7, 8) aufweist.

2. Behälter nach Anspruch 1, dadurch gekennzeichnet, daß das Leitblech (6) zur Behälterinnenwand hin gekröpft und an seinen seitlichen Enden (6.1, 6.2) dicht mit dieser verbunden ist.

3. Behälter nach Anspruch 1 oder 2, dadurch gekennzeichnet, daß an dem Leitblech (6) eine vertikal verlaufende Kante (7) gegenüber der Zulauföffnung (3) angeordnet ist.

4. Behälter nach einem der Ansprüche 1 bis 3, dadurch gekennzeichnet, daß an dem Leitblech (6) eine horizontal verlaufende Kante (8) unterhalb des Niveaus der Zulauföffnung (3) angeordnet ist.

5. Behälter nach einem der Ansprüche 1 bis 4, wobei im Bereich der Ablauföffnung (4) zur Bündelung des im wesentlichen gleichmäßig über den Behälterquerschnitt verteilten Flüssigkeitsstromes zur Ablauföffnung (4) hin eine Stauwand (9) mit horizontaler Ûberlaufkante (10) angeordnet ist, deren Niveau über dem der Sohle der Zulauföffnung (3) liegt, dadurch gekennzeichnet, daß die Stauwand (9) im Ablaufbereich eine Öffnung (12) unterhalb der Sohle der Zulauföffnung (3) aufweist.

6. Behälter nach Anspruch 5, dadurch gekennzeichnet, daß sich an die überlaufkante (10) nach oben ein Gitter (11) anschließt.

## Claims

1. A vessel for the mechanical preliminary clarification of waste water, with an inlet opening and an outlet opening situated opposite thereto, and with a deflector device for the inflowing liquid, which is so arranged inside the vessel in the vicinity of the inlet opening that the concentrated inlet flow is distributed substantially uniformly over the cross-section of the vessel, characterised in that the inlet opening (3) is arranged substantially at the same height as the outlet opening (4), the deflector device comprises a baffle plate (6) which is arranged parallel to and at a distance from the vessel wall, which has a curvature corresponding to the vessel wall (2), which is disposed partly above and partly below the water level (5) and which on the side facing the incoming liquid flow has at least one edge (7,8) projecting from its surface.

2. A vessel according to Claim 1, characterised in that the baffle plate (6) is offset towards the inner wall of the vessel and is fluidtightly connected therewith at its lateral ends (6.1,6.2).

3. A vessel according to Claim 1 or 2, characterised in that a vertically extending edge (7) is arranged on the baffle plate (6) opposite the inlet opening (3).

4. A vessel according to any one of Claims 1 to 3, characterised in that a horizontally extending edge (8) is arranged on the baffle plate (6) below the level of the inlet opening (3).

5. A vessel according to any one of Claims 1 to 4, wherein in the vicinity of the outlet opening (4) a barrier wall (9) with a horizontal overflow edge (10) is provided to concentrate the flow of liquid, which is distributed substantially uniformly over the vessel cross-section, towards the outlet opening (4), the level of which overflow edge is situated above that of the bottom of the inlet opening (3), characterised in that in the outlet zone the barrier wall (9) has an opening (12) below the bottom of the inlet opening (3).

6. A vessel according to Claim 5, characterised in that a grid (11) upwardly adjoins the overflow edge (10).

## Revendications

1. Récipient destiné à la décantation primaire mécanique des eaux résiduaires, présentant un orifice d'entrée et un orifice d'évacuation opposé à celui-ci ainsi qu'un dispositif de guidage destiné au liquide affluant, qui est agencé à l'intérieur du récipient dans la zone de l'orifice d'entrée de telle sorte que le courant d'entrée concentré soit sensiblement réparti de façon uniforme sur la section transversale du récipient, caractérisé en ce que l'orifice d'entrée (3) est sensiblement disposé au même niveau que l'orifice d'évacuation (4), en ce que le dispositif de guidage se compose d'un déflecteur (6) positionné parallèlement et à distance de la paroi du récipient, dont la courbure correspond à la courbure de la paroi du récipient (2), qui est ménagé pour une partie au-dessus et une autre partie en dessous du niveau de l'eau (5), et qui présente, au niveau du côté tourné vers le courant de liquide entrant, au moins une arête (7, 8) qui dépasse de sa surface.

2. Récipient selon la revendication 1, caractérisé en ce que le déflecteur (6) est coudé contre la paroi intérieure du récipient et est relié avec cette paroi de manière étanche à ses extrémités latérales (6.1, 6.2).

3. Récipient selon la revendication 1 ou 2, caractérisé en ce qu'une arête (7) s'étendant dans le sens vertical est prévue sur le déflecteur (6), en face de l'orifice d'entrée (3).

4. Récipient selon l'une des revendications 1 à 3, caractérisé en ce qu'une arête (8) s'étendant dans le sens horizontal est prévue sur le déflecteur (6), en dessous du niveau de l'orifice d'entrée (3).

5. Récipient selon l'une des revendications 1 à 4, dans lequel, dans la zone de l'orifice d'évacuation (4), une chicane (9) présentant un bord déversoir (10) horizontal est disposée pour concentrer le courant de liquide sensiblement réparti de façon uniforme sur la section transversale du récipient en direction de l'orifice d'évacuation (4), le niveau de cette chicane se situant au-dessus de celui du fond de l'orifice d'entrée (3), caractérisé en ce que la chicane (9) présente dans la zone d'évacuation une ouverture (12) située en dessous du fond de l'orifice d'entrée (3).

6. Récipient selon la revendication 5, caractérisé en ce qu'une grille (11) dirigée vers le haut est raccordée au bord déversoir (10).
